# EUROPEAN PATENT APPLICATION

(11) **EP 3 349 345 A1**
(43) Date of publication of application: **18.07.2018**
(21) Application number: 16843900.8
(22) Date of filing: 23.08.2016
(51) Int. Cl.: H02M 3/155, H02M 7/48

(54) **POWER CONVERSION DEVICE**

(30) Priority: 11.09.2015 JP 2015180108
(71) Applicant: Panasonic Intellectual Property Management Co., Ltd., Osaka-shi, Osaka 540-6207 (JP)
(72) Inventor: NAKAHARA, Masayuki, Osaka 540-6207 (JP); HIRATA, Toshiyuki, Osaka 540-6207 (JP); IHIRA, Yasuhisa, Osaka 540-6207 (JP); TSUJIMOTO, Naoki, Osaka 540-6207 (JP)
(74) Representative: Appelt, Christian W.
(86) International application number: PCT/JP2016/003837
(87) International publication number: WO 2017/043027

(57) **Abstract**

In a power converter 20, a first DC-DC converter 21 converts a DC voltage output from a DC power supply 10 into a DC voltage of a different level. A DC-AC converter 22 converts a DC power output from the first DC-DC converter 21 into an AC power and supplies the AC power to an AC load 40. A variable load unit 26 connected to a current path that branches from a node N1 between the first DC-DC converter 21 and the DC-AC converter 22. A controller 25 adjusts the variable load unit 26 so that a total of a power consumption in the AC load 40 and a power consumption in the variable load unit 26 is equal to or larger than a predetermined power value.

## Description

### [TECHNICAL FIELD]

The present invention relates to power converter that convert a DC power into an AC power.

### [BACKGROUND ART]

A power conditioner connected to a photovoltaic power generation system or a storage battery (see, for example, patent document 1) is switched from a grid-connected mode to a self-sustained operation mode in the event of power outage to supply an electric power to a particular load from the power conditioner. In the absence of a load or in the presence of a light load during the self-sustained operation mode, a period of time in which the output current of the DC-DC converter in the power conditioner is brought to 0 occurs (hereinafter, referred to as the discontinuous current mode). In the discontinuous current mode, an abrupt load change cannot be addressed. Therefore, if the load at the self-sustained output terminal increases abruptly, it will be impossible to supply a power to the load normally. For example, when an electric appliance is plugged into an outlet for self-sustained output, the output voltage drops abruptly so that it will be difficult to start the electric appliance due to a shortage in voltage.
[patent document 1] JP2004-357390

### [PROBLEM TO BE SOLVED BY THE INVENTION]

One conceivable method to maintain a current to the load is to connect a large capacitor in response to an abrupt load change. However, the method increases the cost and circuit area. This could be addressed by connecting a dummy load and continuously inducing a current so that at no point of time the output current of the DC-DC converter is brought to 0 (hereinafter, referred to as the continuous current mode). In this method, it is important to control the power consumption in the dummy load.

In this background, a purpose of the present invention is to provide a power converter in which wasteful power consumption is inhibited and an abrupt load change is addressed.

### [MEANS TO SOLVE THE PROBLEM]

A power converter according to an embodiment of the present invention comprises: a first DC-DC converter that converts a DC voltage output from a DC power supply into a DC voltage of a different level; a DC-AC converter that converts a DC power output from the first DC-DC converter into an AC power and supplies the AC power to an AC load; a variable load unit connected to a current path that branches from a node between the first DC-DC converter and the DC-AC converter; and a controller that adjusts the variable load unit so that a total of a power consumption in the AC load and a power consumption in the variable load unit is equal to or larger than a predetermined power value.

Optional combinations of the aforementioned constituting elements, and implementations of the invention in the form of methods, apparatuses, and systems may also be practiced as additional modes of the present invention.

### [ADVANTAGE OF THE INVENTION]

According to this embodiment, a power converter capable of reducing wasteful power consumption and addressing an abrupt load variation is realized.

### [BRIEF DESCRIPTION OF THE DRAWINGS]

Fig. 1 shows a configuration of a power converter according to an embodiment of the present invention;
Figs. 2A-2D are diagrams showing a predetermined power value used in controlling the variable load unit;
Fig. 3 shows a configuration of the power converter according to variation 1; and
Fig. 4 is a diagram showing a configuration of the power converter according to variation 2.

### [MODE FOR CARRYING OUT THE INVENTION]

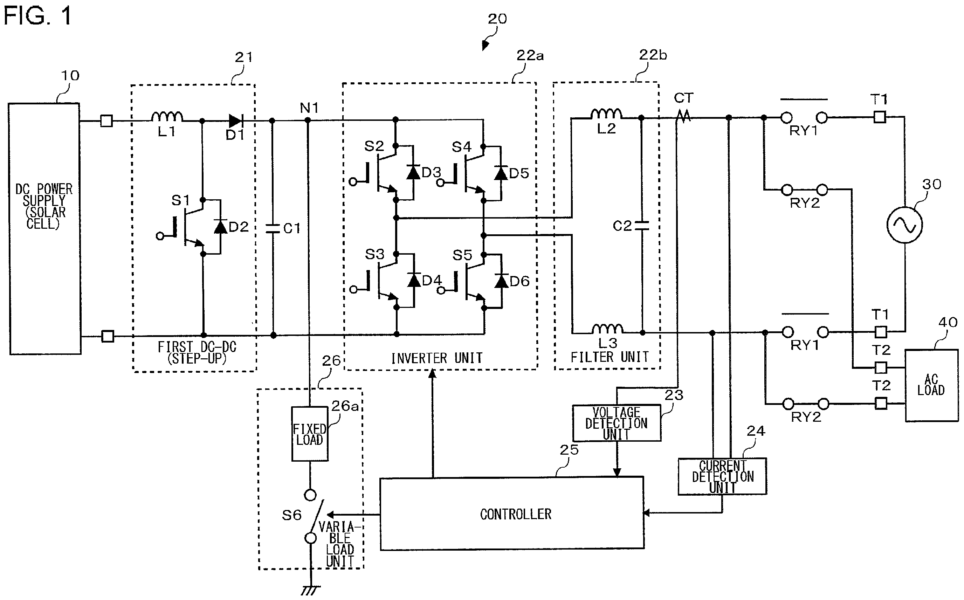

Fig. 1 shows a configuration of a power converter 20 according to an embodiment of the present invention. The power converter 20 is installed between a DC power supply 10 and a grid 30. The power converter 20 converts a DC power supplied from the DC power supply 10 into an AC power and feeds a reverse power flow of the AC power to the grid 30. In this embodiment, the DC power supply 10 is assumed to be a solar cell, and an example will be described in which the power converter 20 functions as a power conditioner that converts a DC power generated by the solar cell into an AC power.

The power converter 20 functioning as a power conditioner is provided with a first DC-DC converter 21, a DC-AC converter 22, and a controller 25 as primary features. The DC-AC converter 22 includes an inverter unit 22a and a filter unit 22b. The power converter 20 has a grid-connected mode and a self-sustained operation mode and is switched from the grid-connected mode to the self-sustained operation mode in the event of power outage. The output path of the filter unit 22b at the output of the power converter 20 branches into two paths. The path for the grid-connected operation is connected to a grid-connected terminal T1 via a grid-connected switch RY1, and the path for the self-sustained output is connected to a self-sustained output terminal T2 via a self-sustained output switch RY2. For example, a relay may be used for the grid-connected switch RY1 and the self-sustained output switch RY2.

In the grid-connected mode, the controller 25 controls the grid-connected switch RY1 to be turned on and controls the self-sustained output switch RY2 to be turned off. In the self-sustained operation mode, the controller 25 controls the grid-connected switch RY1 to be turned off and controls the self-sustained output switch RY2 to be turned on. In this specification, the operation of the power converter 20 in the self-sustained operation mode is highlighted. An AC load 40 is connected to the self-sustained output terminal T2. The AC load 40 can receive a power from the DC power supply 10 in the event of power outage.

In a case that the power converter 20 is a small power conditioner for home use, an AC outlet is often provided in the housing of the power conditioner to serve as the self-sustained output terminal T2. Alternatively, an indoor emergency AC outlet may be connected to the self-sustained output terminal T2 by wiring. Users can use an electric appliance by connecting the AC power plug of the electric appliance to the AC outlet in the event of power outage.

In a case that the power converter 20 is a large power conditioner for offices and condominiums, the self-sustained output terminal T2 and a particular AC load 40 (e.g., a panel light or an elevator) may be connected prospectively.

The first DC-DC converter 21 converts a DC voltage output from the DC power supply 10 into a DC voltage of a different level and outputs the resultant voltage to the DC-AC converter 22. Fig. 1 depicts an example in which a step-up chopper is used as the first DC-DC converter 21. The step-up chopper steps up the output voltage of the solar cell as the DC power supply 10 and outputs the resultant voltage to the DC-AC converter 22.

The step-up chopper includes a first reactor L1, a first diode D1, and a first switching device S1. The first reactor L1 and the first diode D1 are inserted in series in the high-side reference line connected to the positive terminal of the DC power supply 10. The first switching device S1 is connected between the node between the first reactor L1 and the first diode D1, and the low-side reference line connected to the negative terminal of the DC power supply 10.

For example, an Insulated Gate Bipolar Transistor (IGBT) or a Metal-Oxide-Semiconductor Field Transistor (MOSFET) can be used as the first switching device S1. A second diode D2 is a feedback diode and is connected in parallel with the first switching device S1 in a backward direction. In a case that a MOSFET is used as the first switching device S1, a parasitic diode formed in the direction from the source to the drain can be used as the second diode D2. The controller 25 controls the duty ratio of the first switching device S1 in accordance with a drive signal input to the gate terminal of the first switching device S1 and adjusts the step-up ratio of the step-up chopper. Although Fig. 1 shows an example of using a step-up chopper as the first DC-DC converter 21, other converts such as an insulated DC-DC converter may be used.

The first capacitor C1 smooths the output voltage of the first DC-DC converter 21. The DC-AC converter 22 converts the DC power output from the first DC-DC converter 21 into an AC power and outputs the AC power. In this embodiment, the self-sustained operation mode is assumed so that the AC power as converted is supplied to the AC load 40.

Fig. 1 shows an example in which the inverter unit 22a of the DC-AC converter 22 is implemented by a full-bridge circuit. The full-bridge circuit includes a first arm and a second arm connected in parallel between the high-side reference line and the low-side reference line, where the first arm includes a second switching device S2 and a third switching device S3 connected in series, and the second arm includes a fourth switching device S4 and a fifth switching device S5 connected in series. The AC power is output from the middle point of the first arm and the middle point of the second arm.

For example, an IGBT can be used as the second switching device S2∼fifth switching device S5. The collector terminal of the second switching device S2 and the collector terminal of the fourth switching device S4 are connected to the high-side reference line. The emitter terminal of the third switching device S3 and the emitter terminal of the fifth switching device S5 are connected to the low-side reference line. The emitter terminal of the second switching device S2 and the collector terminal of the third switching device S3 are connected, and the emitter terminal of the fourth switching device S4 and the collector terminal of the fifth switching device S5 are connected.

Third diode D3∼sixth diode D6 are feedback diodes and are connected in parallel with the second switching device S2∼fifth switching device S5, respectively, in a backward direction. In a case that a MOSFET is used as the second switching device S2∼fifth switching device S5, a parasitic diode formed in the direction from the source to the drain can be used as the third diode D3∼sixth diode D6.

The filter unit 22b includes a second reactor L2, a third reactor L3, and a second capacitor C2. The filter unit 22b attenuates high-frequency components in the AC power output from the inverter unit 22a so as to approximate the output voltage and output current of the inverter unit 22a to sinusoidal waves.

A current detection unit 23 detects an AC current output from DC-AC converter 22 by using a current sensor CT. The current detection unit 23 converts the instantaneous value of the current detected by the current sensor CT into a voltage signal and outputs the voltage signal to the controller 25. A voltage detection unit 24 detects the instantaneous value of the AC voltage output from the DC-AC converter 22 and outputs the instantaneous value to the controller 25.

The controller 25 controls the power converter 20 as a whole. The feature of the controller 25 is implemented by the coordination of hardware resources and software resources, or hardware resources alone. An analog device, microcomputer, DSP, ROM, RAM, FPGA, and other LSIs can be used as hardware resources. Programs such as firmware can be used as software resources.

The controller 25 generates a drive signal for the inverter unit 22a based on a voltage instruction value and supplies the drive signal to the inverter unit 22a. In this embodiment, a PWM signal is generated as the drive signal and supplied to the gate terminals of the second switching device S2∼fifth switching device S5. By increasing the duty ratio of the PWM signal, the output power of the inverter unit 22a is increased. By decreasing the duty ratio of the PWM signal, the output power of the inverter unit 22a is decreased. The controller 25 refers to the detected output voltage and/or output current of the DC-AC converter 22 and adjusts the duty ratio of the PWM signal so that the output voltage and/or output current are stabilized.

A variable load unit 26 is connected to a current path that branches from a node N1 (desirably located in a stage following the first capacitor C1) between the first DC-DC converter 21 and the DC-AC converter 22. The variable load unit 26 plays the role of a dummy load, whereas the AC load 40 connected to the self-sustained output terminal T2 is defined as a real load. In the example shown in Fig. 1, the variable load unit 26 includes a fixed load 26a and a seventh switch S7. The fixed load 26a and the seventh switch S7 are connected in series between the node N1 and a predetermined reference potential (e.g., the ground potential). For example, a heater resistance can be used as the fixed load 26a. A semiconductor switch or a relay can be used as the seventh switch S7.

The controller 25 adjusts the variable load unit 26 so that the total of the power consumption in the AC load 40 and the power consumption in the variable load unit 26 is equal to or larger than a predetermined power value. In other words, if the AC load 40 as a real load is of a magnitude that causes the first DC-DC converter 21 to operate intermittently (the discontinuous current mode), the magnitude of the dummy load is adjusted so that the total of the AC load 40 and the variable load unit 26 as a dummy load exceeds the magnitude that prevents the first DC-DC converter 21 from operating intermittently (the continuous current mode). In the example shown in Fig. 1, the controller 25 adjusts the power consumed in the variable load unit 26 by adjusting the duty ratio of on/off periods of the seventh switch S7.

The controller 25 determines the power that should be consumed in the variable load unit 26 based on the effective power supplied to the AC load 40. In other words, the effective power supplied from the power converter 20 to the AC load 40 is used as a parameter to adjust the variable load unit 26. The controller 25 determines the effective power supplied to the AC load 40 based on the output voltage and the output current of the DC-AC converter 22. More specifically, the controller 25 calculates the instantaneous power by multiplying the instantaneous current value detected by the current detection unit 23 and the instantaneous voltage value detected by the voltage detection unit 24. The controller 25 calculates the effective power by calculating an average of the instantaneous power over a unit period. The effective power may alternatively be determined by measuring the phase of the output voltage and performing rotating coordinate transformation. In the case of a three-phase AC, the effective power is determined by rotating coordinate transformation. The power supplied to the AC load 40 includes a reactive power. It is therefore desired that the power that should be consumed in the variable load unit 26 be determined based on the effective power instead of the current output from the power converter 20 from the perspective of ensuring precision.

In the example shown in Fig. 1, the effective power supplied to the AC load 40 is calculated based on the output current and the output voltage of the DC-AC converter 22. The effective power supplied to the AC load 40 may alternatively be calculated based on the input current and the input voltage of the DC-AC converter 22. In this case, a current detection unit and a voltage detection unit need also be provided at the input of the DC-AC converter 22, but the impact from the loss in the DC-AC converter 22 is included in the measurement value so that the load of the first DC-DC converter 21 is measured more accurately.

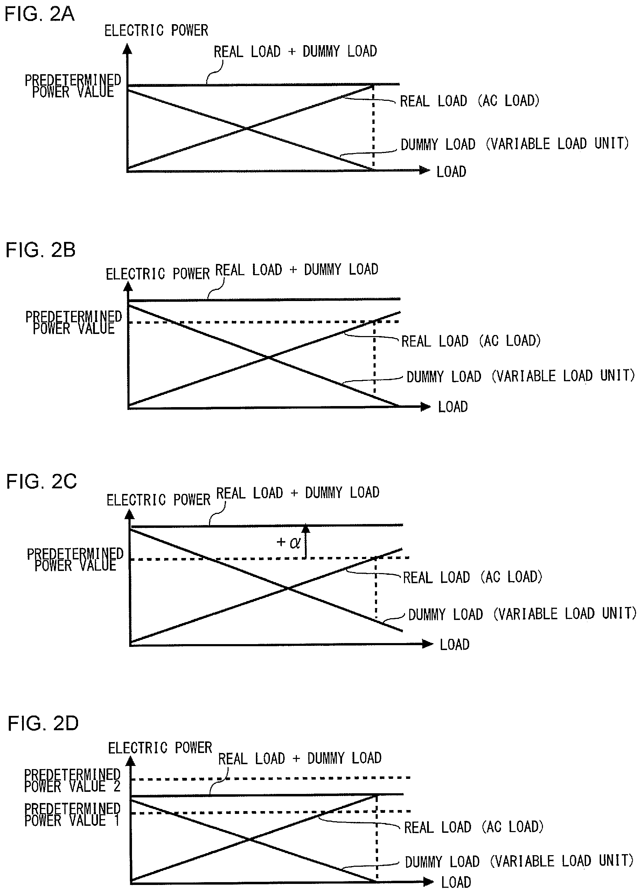

Figs. 2A-2D are diagrams showing a predetermined power value used in controlling the variable load unit 26. Fig. 2A shows an example of setting the predetermined power value at a boundary between a range of power values in which the first DC-DC converter 21 operates in the continuous current mode and a range of power values in which it operates in the discontinuous current mode. In essence, the predetermined power value is set to be the lower limit that allows the first DC-DC converter 21 to operate in the continuous current mode. The controller 25 controls the magnitude of the dummy load so that the sum of the real load and the dummy load matches the predetermined power value. More specifically, the dummy load is increased as the real load decreases, and the dummy load is decreased as the real load increases.

The boundary between the continuous current mode and the discontinuous current mode depends on the input power of the first DC-DC converter 21. Therefore, the predetermined power value may not be a fixed value but may be a variable value determined by using the input power of the first DC-DC converter 21 as a parameter. The controller 25 adaptively changes the predetermined power value in accordance with the input power of the first DC-DC converter 21.

Fig. 2B shows an example in which the magnitude of the dummy load is controlled so that the sum of the real load and the dummy load is equal to or larger than the predetermined power value. As shown in Fig. 2A, the loss is at minimum when the sum of the real load and the dummy load matches the predetermined power value. If, however, the controller 25 fails to track an abrupt drop in the real load by controlling the dummy load to be increased, the discontinuous current mode will set in. In the example shown in Fig. 2B, the discontinuous current mode is prevented from setting in in response to an abrupt drop in the real load, by providing a margin for the purpose of operation.

Fig. 2C shows an example in which the magnitude of dummy load is controlled so that the sum of the real load and the dummy load matches the predetermined power value + offset value α. As compared with the case shown in Fig. 2B, the sum of the real load and the dummy load does not deviate radically from the predetermined power value so that the loss is controlled. The offset value α is set to be a value that allows the first DC-DC converter 21 to maintain the continuous current mode in the event of an abrupt drop in the real load, by allowing for the assumed abrupt drop in the real load and the response of the controller 25 used. The designer sets the offset value α based on at least one of a specification value, an experiment value obtained by an experiment, and a simulation value obtained by a simulation.

Fig. 2D shows an example in which the controller 25 controls the magnitude of the dummy load so that the sum of the real load and the dummy load is accommodated in a range between a predetermined power value 1 and a predetermined power value 2. The predetermined power value 1 corresponds to the predetermined power value described above. The predetermined power value 2 is set such that a difference from the predetermined power value 1 is smaller than the predetermined power value 1. The controller 25 increases the dummy load when the sum of the real load and the dummy load falls below the predetermined power value 1, and decreases the dummy load when the sum of the real load and the dummy load exceeds the predetermined power value 2.

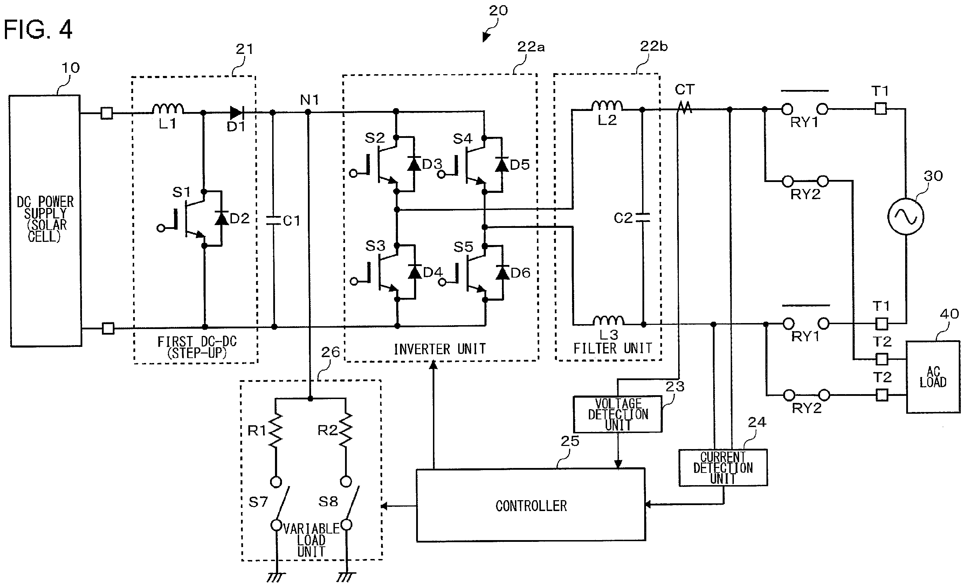

This prevents the dummy load from being connected excessively. Since it is only required that the sum of the real load and the dummy load be within a certain range, control is easy. If, for example, the control resolution of the dummy load is large (see, for example, Fig. 4 described later), a phenomenon (chattering), in which the sum of the real load and the dummy load exceeds or falls below the predetermined power value of Figs. 2A-2C, may occur each time the magnitude of the dummy load is switched. Given that the control resolution of the dummy load is 100 W and the predetermined power value is 150 W, for example, chattering of the dummy load occurs such that 100 W->200 W->100 W->200 W. By using the range shown in Fig. 2D, chattering like this is prevented.

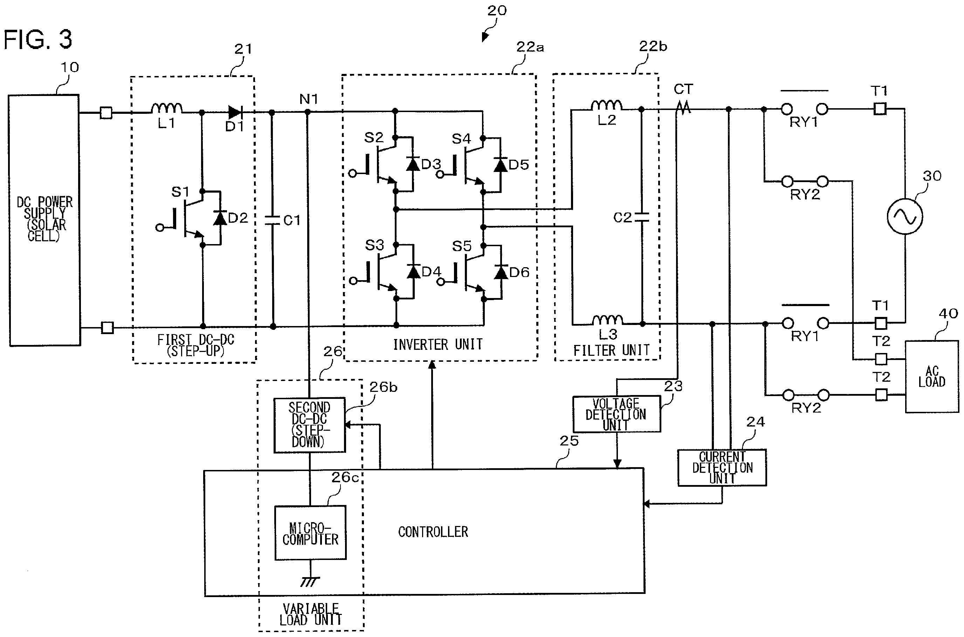

Fig. 3 shows a configuration of the power converter 20 according to variation 1. As compared with the power converter 20 shown in Fig. 1, the power converter 20 shown in Fig. 3 differs in the configuration of the variable load unit 26. The variable load unit 26 of variation 1 includes a second DC-DC converter 26b as an auxiliary power supply and a microcomputer 26c. The second DC-DC converter 26b and the microcomputer 26c are connected in series between the node N1 and the predetermined reference potential. The second DC-DC converter 26b is a step-down chopper that generates a power supply voltage for the microcomputer 26c. The microcomputer 26c is an example of a processing device that performs predetermined processes in the power converter 20. The processing device may be a device provided inside the controller 25 as shown in Fig. 3. Alternatively, the processing device may be a device provided externally. The controller 25 adjusts the power consumed in the variable load unit 26 by controlling the second DC-DC converter 26b as an auxiliary power supply. More specifically, the controller 25 increases the output voltage of the second DC-DC converter 26b when the AC load 40 decreases, and decreases the output voltage of the second DC-DC converter 26b when the AC load 40 increases.

Fig. 4 is a diagram showing a configuration of the power converter 20 according to variation 2. As compared with the power converter 20 shown in Fig. 1, the power converter 20 shown in Fig. 4 differs in the configuration of the variable load unit 26. The variable load unit 26 of variation 2 includes a parallel circuit formed by a first series circuit, in which a first resistor R1 and a seventh switch S7 are connected in series between the node N1 and the predetermined reference potential, and by a second series circuit, in which a second resistor R2 and an eighth switch S8 are connected in series between the node N1 and the predetermined reference potential. The number of series circuits connected in parallel is not limited to 2 but may be 3 or more. The resistance values of the resistors connected in parallel may be the same or different.

The controller 25 adjusts the power consumed in the variable load unit 26 not by adjusting the duty ratio of on/off periods of the switch but by adjusting the number of switches controlled to be turned on. Increasing the number of parallel connections enables finer control, and decreasing the number of parallel connections reduces the circuit area and the cost.

As described above, according to the embodiment, wasteful power consumption is inhibited and an abrupt change in the AC load 40 is addressed during the self-sustained operation mode, by connecting the variable load unit 26 to the output of the first DC-DC converter 21. In essence, the first DC-DC converter 21 is prevented from entering the discontinuous current mode and voltage shortage in the AC load 40 is avoided.

According to variation 1, wasteful loss is reduced more successfully than in the case of using a load like a heater resistance, by maintaining the continuous current mode of the first DC-DC converter 21 by using the power consumption in a processing device such as the microcomputer 26c. According to variation 2, duty control of the switches is not necessary so that the configuration of the control system is simplified.

Described above is an explanation based on an exemplary embodiment. The embodiment is intended to be illustrative only and it will be obvious to those skilled in the art that various modifications to constituting elements and processes could be developed and that such modifications are also within the scope of the present invention.

In the embodiment described above, the DC power supply is assumed to be a solar cell. Alternatively, the DC power supply may be a fuel cell or a storage battery. In the case of a storage battery, the AC power from the grid 30 can be converted by the power converter 20 into a DC power to charge the storage battery. In this case, the first DC-DC converter 21 and the DC-AC converter 22 of bidirectional type are used.

In the embodiment described above, an example is described in which the DC-AC converter 22, the grid 30, and the AC load 40 are adapted to single-phase AC. The embodiment can also be applied to a case in which the DC-AC converter 22, the grid 30, and the AC load 40 are adapted to three-phase AC.

In the embodiment described above, the power converter 20 is assumed to be a power conditioner having a grid-connected mode and a self-sustained operation mode. The technology according to the embodiment described above is also applicable to the power converter 20 not connected to the grid. For example, in applications where the power converter 20 is permanently connected to an illuminating lamp, a load change occurs when the lamp is turned on or off according to an illuminance sensor. Therefore, the inventive technology is useful.

The embodiments may be defined by the following items.

### [Item 1]

A power converter (20) comprising:
a first DC-DC converter (21) that converts a DC voltage output from a DC power supply (10) into a DC voltage of a different level;
a DC-AC converter (22) that converts a DC power output from the first DC-DC converter (21) into an AC power and supplies the AC power to an AC load (40);
a variable load unit (26) connected to a current path that branches from a node (N1) between the first DC-DC converter (21) and the DC-AC converter (22); and
a controller (25) that adjusts the variable load unit (26) so that a total of a power consumption in the AC load (40) and a power consumption in the variable load unit (26) is equal to or larger than a predetermined power value.

By changing the magnitude of the variable load unit (26) in accordance with the magnitude of the AC load (40), the AC load (40) is supplied with a power in a stable manner even in the event of an abrupt change in the AC load (40).

### [Item 2]

The power converter (20) according to Item 1, wherein the controller (25) determines the power consumption in the variable load unit (26) according to an effective power supplied to the AC load (40).

The power value of the AC load (40) may become negative depending on the power factor. When the power factor becomes small, it will not be possible to control the variable load unit (26) properly. By measuring the effective power, however, it will be possible to adjust the variable load unit (26) properly based on the power actually consumed in the AC load (40).

### [Item 3]

The power converter (20) according to Item 2, wherein the controller (25) determines the effective power supplied to the AC load (40) based on an output voltage and an output current of the DC-AC converter (22).

It is common in the power converter (20) to provide a voltage detection circuit and a current detection circuit at the output of the DC-AC converter (22). Therefore, the effective power supplied to the AC load (40) can be measured without adding an extra detection circuit.

### [Item 4]

The power converter (20) according to Item 2, wherein the controller (25) determines the effective power supplied to the AC load (40) based on an input voltage and an input current of the DC-AC converter (22). According to this, the loss in the DC-AC converter (22) can also be measured.

The loss in the DC-AC converter (22) also represents a load for the first DC-DC converter (21) so that the load for the first DC-DC converter (21) can be measured more properly.

### [Item 5]

The power converter (20) according to one of Items 1 through 4, wherein
the variable load unit (26) includes a series circuit connected to the node (N1) and including a series connection of a fixed load (26a) and a switch (S6), and
the controller (25) adjusts a power consumed in the fixed load (26a) by adjusting a duty ratio of the switch (S6).

The variable load unit (26) is implemented in a simpler configuration.

### [Item 6]

The power converter (20) according to one of Items 1 through 4, wherein
the variable load unit (26) includes a second DC-DC converter (26b) for an auxiliary power supply connected to the node (N1), and a processing device (26c) that performs a predetermined process, and
the controller (25) adjusts a power consumed in the processing device (26c) by controlling the second DC-DC converter (26b).
By using a processing device instead of a resistor as a load, the power consumption in the variable load unit (26) is used effectively.

### [Item 7]

The power converter (20) according to one of Items 1 through 6, wherein the predetermined power value is set to be a minimum power value capable of inducing a continuous output current of the first DC-DC converter (21).

This will make it easier to calculate the power that should be consumed in the variable load unit (26) and to avoid the discontinuous current mode more properly.

### [Item 8]

The power converter (20) according to Items 1 through 7, wherein the controller (25) adjusts the variable load unit (26) so that the total of the power consumption in the AC load (40) and the power consumption in the variable load unit (26) is equal to the predetermined power value.

This allows the variable load unit (26) to be operated with the minimum power consumption capable of avoiding the discontinuous current mode of the first DC-DC converter (21) and prevents wasteful power consumption in the variable load unit (26).

### [Item 9]

The power converter (20) according to Items 1 through 7, wherein the controller (25) adjusts the variable load unit (26) so that the total of the power consumption in the AC load (40) and the power consumption in the variable load unit (26) is equal to a value derived from adding an offset value to the predetermined power value.

The offset value functions as a margin and helps avoid the discontinuous current mode of the first DC-DC converter (21) more properly.

### [Item 10]

The power converter (20) according to Item 9, wherein the offset value is set to a value that prevents an output current of the first DC-DC converter (21) from discontinuing in the presence of a change in the AC load (40).

The discontinuous current mode of the first DC-DC converter (21) is avoided and, at the same time, the loss is controlled.

### [Item 11]

The power converter (20) according to Items 1 through 10, wherein the controller (25) adjusts the variable load unit (26) so that the total of the power consumption in the AC load (40) and the power consumption in the variable load unit (26) is accommodated in a predetermined range in which the predetermined power value is a lower limit value.

This prevents chattering of the variable load unit (26) when the control resolution of the variable load unit (26) is course.

### [Item 12]

The power converter (20) according to Item 10, wherein a width of the range is smaller than the predetermined power value.

Wasteful power consumption is reduced more properly as compared with a case of merely controlling a dummy load to be connected and disconnected.

### [Item 13]

The power converter (20) according to one of Items 1 through 12, wherein the DC-AC converter (22) outputs an AC power as converted to a grid in a normal mode, and outputs the AC power to the AC load (40) in the event of power outage.

The discontinuous current mode of the first DC-DC converter (21) in the self-sustained operation mode is avoided.

### [DESCRIPTION OF THE REFERENCE NUMERALS]

10 DC power supply, 20 power converter, 21 first DC-DC converter, 22 DC-AC converter, 22a inverter unit, 22b filter unit, 23 current detection unit, 24 voltage detection unit, 25 controller, 26 variable load unit, 26a fixed load, 26b second DC-DC converter, 26c microcomputer, 30 grid, 40 AC load, L1 first reactor, L2 second reactor, L3 third reactor, D1 first diode, D2 second diode, D3 third diode, D4 fourth diode, D5 fifth diode, D6 sixth diode, C1 first capacitor, C2 second capacitor, S1 first switching device, S2 second switching device, S3 third switching device, S4 fourth switching device, S5 fifth switching device, S6 sixth switch, S7 seventh switch, S8 eighth switch, R1 first resistor, R2 second resistor, RY1 grid-connected switch, RY2 self-sustained output switch

### [INDUSTRIAL APPLICABILITY]

The present invention can be used in power conditioners for solar cells, etc.

## Claims

1. A power converter comprising:
a first DC-DC converter that converts a DC voltage output from a DC power supply into a DC voltage of a different level;
a DC-AC converter that converts a DC power output from the first DC-DC converter into an AC power and supplies the AC power to an AC load;
a variable load unit connected to a current path that branches from a node between the first DC-DC converter and the DC-AC converter; and
a controller that adjusts the variable load unit so that a total of a power consumption in the AC load and a power consumption in the variable load unit is equal to or larger than a predetermined power value.

2. The power converter according to claim 1, wherein
the controller determines the power consumption in the variable load unit based on an effective power supplied to the AC load.

3. The power converter according to claim 2, wherein
the controller determines the effective power supplied to the AC load based on an output voltage and an output current of the DC-AC converter.

4. The power converter according to claim 2, wherein
the controller determines the effective power supplied to the AC load based on an input voltage and an input current of the DC-AC converter.

5. The power converter according to one of claims 1 through 4, wherein
the variable load unit includes a series circuit connected to the node and including a series connection of a fixed load and a switch, and
the controller adjusts a power consumed in the fixed load by adjusting a duty ratio of the switch.

6. The power converter according to one of claims 1 through 4, wherein
the variable load unit includes a second DC-DC converter for an auxiliary power supply connected to the node, and a processing device that performs a predetermined process, and
the controller adjusts a power consumed in the processing device by controlling the second DC-DC converter.

7. The power converter according to one of claims 1 through 6, wherein
the predetermined power value is set to be a minimum power value capable of inducing a continuous output current of the first DC-DC converter.

8. The power converter according to one of claims 1 through 7, wherein
the controller adjusts the variable load unit so that the total of the power consumption in the AC load and the power consumption in the variable load unit is equal to the predetermined power value.

9. The power converter according to one of claims 1 through 7, wherein
the controller adjusts the variable load unit so that the total of the power consumption in the AC load and the power consumption in the variable load unit is equal to a value derived from adding an offset value to the predetermined power value.

10. The power converter according to claim 9, wherein
the offset value is set to a value that prevents an output current of the first DC-DC converter from discontinuing in the presence of a change in the AC load.

11. The power converter according to one of claims 1 through 10, wherein
the controller adjusts the variable load unit so that the total of the power consumption in the AC load and the power consumption in the variable load unit is accommodated in a predetermined range in which the predetermined power value is a lower limit value.

12. The power converter according to claim 11, wherein
a width of the range is smaller than the predetermined power value.

13. The power according to one of claims 1 through 12, wherein
the DC-AC converter outputs an AC power as converted to a grid in a normal mode, and outputs the AC power to the AC load in the event of power outage.
